# EUROPEAN PATENT APPLICATION

(11) **EP 4 506 665 A1**
(43) Date of publication of application: **12.02.2025**
(21) Application number: 23425051.2
(22) Date of filing: 10.08.2023
(51) Int. Cl.: G01F 1/66, G01D 9/00, G01F 15/00, G01F 15/02, G01F 15/063, G01K 13/02, G01K 13/024, G01L 19/00, G01M 3/24, G01M 3/26, G01M 3/28, G05D 7/00

(54) **DEVICE FOR READING AND MONITORING GAS SUPPLY AND OPERATION METHOD THEREOF**

(71) Applicant: HERA S.p.A., 40127 Bologna (BO) (IT)
(72) Inventor: Bondesan, Marcello, 40127 BOLOGNA (BO) (IT); Giunchi, Daniele, 40127 BOLOGNA (BO) (IT)
(74) Representative: Gitto, Serena

(57) **Abstract**

The present invention concerns a device (1), for reading and controlling the gas supply, wherein there is an input connector (11) and an output connector (12) of a pipe in which gas flows from a distribution network towards at least one residential user, comprising a control logic unit (2) for the operation of said device (1), which includes a plurality of sensors (3) operationally connected to said control logic unit (2), for measuring values of physical quantities, a gas supply blocking member (4), operationally connected to said control logic unit (2), wherein said control logic unit (2) includes: a threshold value access module (21) configured to receive, from an archive, first and/or second predetermined threshold values; a first comparison module (22) configured to compare said values measured by said plurality of sensors (3) with said first predetermined threshold values; a recording module (23), operatively connected to said plurality of sensors (3), configured to record one or more time series of said values measured by each sensor of said plurality (3); a processing module (24) configured to process said one or more time series recorded by said recording module; a second comparison module (25) configured to compare said one or more recorded time series with said second predetermined threshold values; an interruption module (26) configured to send an alarm signal and activate said blocking member (4) to block the gas supply, if said measured values are higher than said first predetermined threshold values; and a reopening module (27) configured to send an inhibition command of said blocking member (4) to inhibit said blocking member (4) and allow the gas supply, if said measured values are higher than said first predetermined threshold values and if the values obtained from a processing of said one or more series, by means of said processing module, are lower than said second predetermined threshold values.

The present invention also concerns an operating method of said device.

## Description

The present invention concerns the reading and control of gas supply, equipped with an interruption and reset system, in particular to guarantee safety during its operation.

### Field of invention

More in detail, the invention concerns a device of the aforementioned type, designed and created in particular for the reading and the control of gas consumption for residential users, but which can be used for any type of system, for which reading and control of the gas supply are necessary, especially to secure the downstream system in the event of anomalous situations.

In the following, the description will be directed to a device for residential users, but it is clear that it should not be considered limited to this specific use.

### Prior art

As is well known, gas meters are devices capable of informing the network manager and a user of the gas consumed by the user, indicating the total volume of gas that has flowed through the section of the pipe on which a meter is installed.

Furthermore, devices that are positioned around a passage of a fluid, for example, a duct for the passage of gas, equipped with at least one motion sensor in contact with the casing of the device, and a sensor to detect variations in the inclination of the device wrapped around the duct are becoming more widespread. In these devices, the data collected by the sensors are used by a control unit that detects attempts to break into the casing.

This type of apparatus is generally used at the end part of a fluid passage, for example, near a gas meter.

Therefore, the use of such devices requires the presence of a plurality of devices, for example, a counter and one or more of the said devices equipped with motion sensors.

The use of devices equipped with sensors to detect attempts to tamper with another device is also known. Therefore, even for this application it is required that these devices interact with a further plant, system, or device, for example, a pipeline through which the fluid flows.

The presence of such sensorized devices, therefore, by enveloping a duct or other device, increases the volume of the system composed of said sensorized device and said pipeline or other device.

Also known is a fluid measuring device connected to an interruption unit capable of detecting a fluid leak by means of a sensor that detects the speed of the fluid flow and transmits a command to a control panel to close a means for interruption of the flow, which interrupts the passage of the fluid in case of a leak.

It is clear that in order to operate, these devices require an electronic processing unit or a means of communication with the devices of which they detect any tampering or malfunction.

### Scope of the invention

In light of the above, it is, therefore, the scope of the present invention to provide a device for reading and controlling the gas supply of a residential user, which is compact and capable of operating without the need for further equipment.

Another scope is to provide a device equipped with sensors, an input connector and an output connector, through which gas flows, a gas supply blocking device and a control logic unit capable of carrying out a consumption reading and managing the gas supply safely.

Another scope of the invention is to provide a device equipped with means for activating or inhibiting a gas supply blocking member.

Another scope of the invention is to provide a device for gas distribution capable of dynamically adapting the threshold values according to the user's consumption habits and/or environmental conditions and/or variations in the distribution network.

Another scope of the invention is to provide a device for dispensing and controlling gas, equipped with one or more sensors to verify the presence of tampering with the device.

A further scope of the present invention is to provide the tools necessary for carrying out the method, and the apparatus which carry out this method.

Another scope of the invention is to provide a device equipped with measurement sensors for different physical quantities and a device control unit capable of stopping the gas supply, based on values measured by said sensors.

Another scope is to provide a communication unit for transmitting data, for example, relating to alarms or diagnostics and/or for receiving commands from a central management system.

### Object of the invention

These and other results are obtained according to the invention with a device for reading and controlling the gas supply as defined in claim 1.

Preferred embodiments are defined in the dependent claims.

### Brief description of the figures

The present invention will be now described, for illustrative but not limitative purposes, according to its preferred embodiments, with particular reference to the figures of the enclosed drawings, wherein:
figure 1 shows a gas reader, known in the state of the art;
figure 2 shows the known gas reader of figure 1, to which a device for storing the measured pressure values is connected; and
figure 3 shows, in a perspective view, a device for reading and controlling the gas that is the object of the present invention, connected to a gas supply pipe;
figure 4 shows a front view of a device for reading and controlling the gas that is the object of the present invention;
figure 5 shows a diagram of a device for reading and controlling the gas that is the object of the present invention;
figure 6 shows a diagram of a device for reading and controlling the gas supply that is the object of the present invention;
figure 7 shows a graph corresponding to values measured by a plurality of sensors of a device object of the present invention;

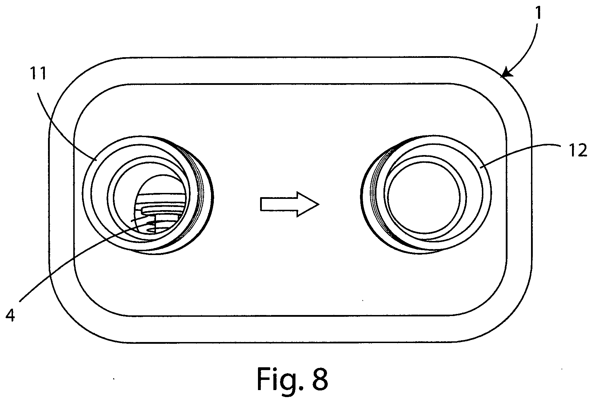

figure 8 shows a top view of the device in figure 3, where the inlet and outlet connectors of the gas supply connectors are shown.

### Detailed description

In the various figures the similar parts will be indicated with the same numerical references.

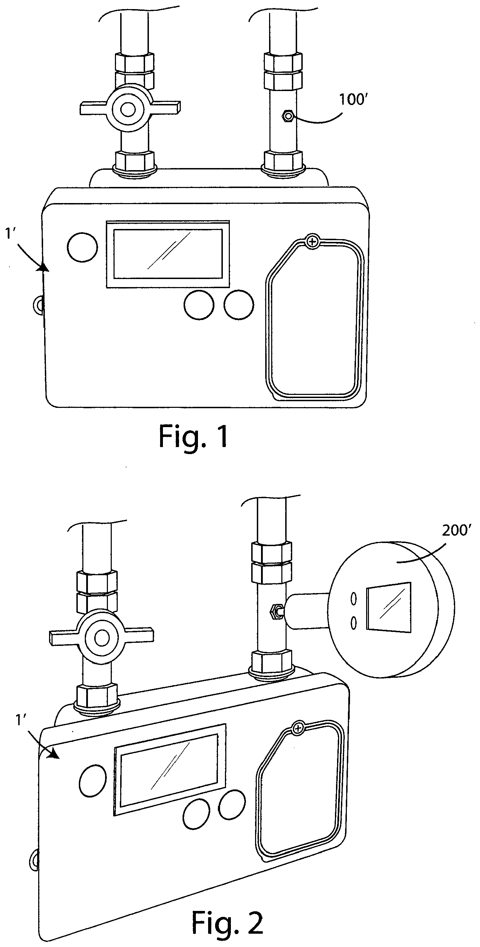

A common gas meter, as part of the prior art, does not provide the possibility of storing time series of measurements relating to the operation of the gas network near the meter. As can be seen from figure 1, in order to store time series of measurements relating to the operation of the gas network near the meter 1', it is necessary to modify a portion of the pipe connected to the meter 1', for example, by means of a special connector 100', to which an additional device must be connected.

Said further device, also known, can be a data-logger 200', which allows storing values, for example, of the pressure measured at regular intervals and for a predefined period of time, and communicating remotely with the distribution network manager.

The device of the present invention is essentially a device 1, for reading and controlling the gas supply, in which an input connector 11 and an output connector 12 are obtained of a pipe in which gas flows from a distribution network towards at least one residential user, comprising a control logic unit 2 for the operation of said device 1, and for storing predetermined threshold values, comprising a plurality of sensors 3, operatively connected to said control logic unit 2, for measurement of values of physical quantities and sending them to said control logic unit 2, a gas supply blocking member 4, operatively connected to said control logic unit 2, said control logic unit 2 being configured to compare said values measured and received by said plurality of sensors 3 with said predetermined threshold values, to send alarm signals and to activate said blocking member 4 to block the gas supply, if said measured values are higher than said values of the predetermined thresholds.

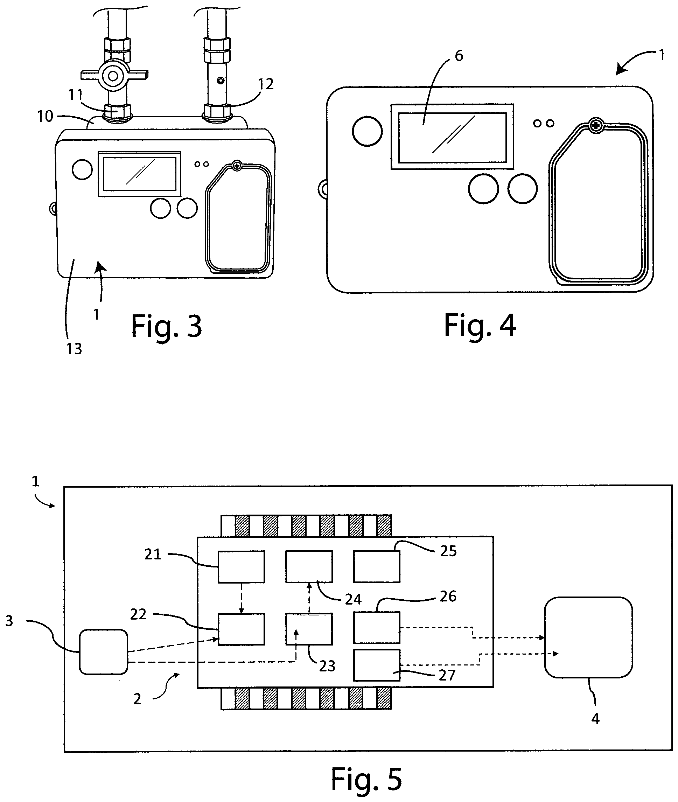

Referring to figure 3, the device 1 essentially comprises a first housing 10 and a second housing 13 communicating with each other.

Said first housing 10 has on its external surface an input connector 11 and an output connector 12 of a pipe in which gas flows from a distribution network towards residential users, and internally includes the gas pipe, a blocking member 4 for closing the gas supply, and one or more sensors of said plurality of sensors 3.

Said first housing 10 is preferably made of pressed steel, or polymeric material, in order to guarantee high resistance to corrosion, both external and internal, resistance to high operating temperatures, and high hydraulic tightness, for example, to withstand a pressure of at least 0.5 bar.

The second housing 13 includes the control logic unit 2 and a power supply.

In some embodiments, the second housing 13 also contains a plurality of sensors 3 and a transceiver unit 5, operationally connected to the control logic unit.

In some embodiments, the second housing 13 includes, on one of its external surfaces, an optical display 6, for example, a display to display the data or values measured by the sensors 3, and a reset button 7.

Furthermore, the device 1 can include a door to access the internal part of said second housing 13, so as to be able to replace the sensors of said plurality of sensors 3 or said control logic unit 2, if a failure or excessive use occurs of the same.

With reference to figure 5, the control logic unit 2 comprises an access module 21, a first comparison module 22, a recording module 23, a processing module 24, a second comparison module 25, an interruption module 26, and a reopening module 27.

In particular, said control logic unit 2 is a PLC - programmable logic controller type processor, i.e. a computer for industrial use adapted to the control and execution of processes of components controlled by it.

The threshold value access module 21 is configured to receive or read, from an archive, predetermined first and/or second threshold values.

Said access module 21 interacts with an archive where the values measured and sent by said plurality of sensors 3 and the first threshold values are stored, for example, pre-established values of normal operation of said device 1, such as pressure, flow, and temperature.

The first comparison module 22 is configured to receive the values measured by said plurality of sensors 3 and compare them with the first predetermined threshold values, received from the access module 21, which the comparison module 22 accesses.

The recording module 23 is operationally connected to the plurality of sensors 3, to record one or more time series of said values measured by each sensor of said plurality 3.

In particular, the recording duration, i.e. the time during which to record a series and/or the recording frequency, i.e. the time interval between two different detections of the same sensor, are configurable using the recording module 23.

For example, it is possible to record the data detected by the sensors every second during an hour if a component has been changed, for example, a joint, a valve or similar, in order to verify the correct installation of the component.

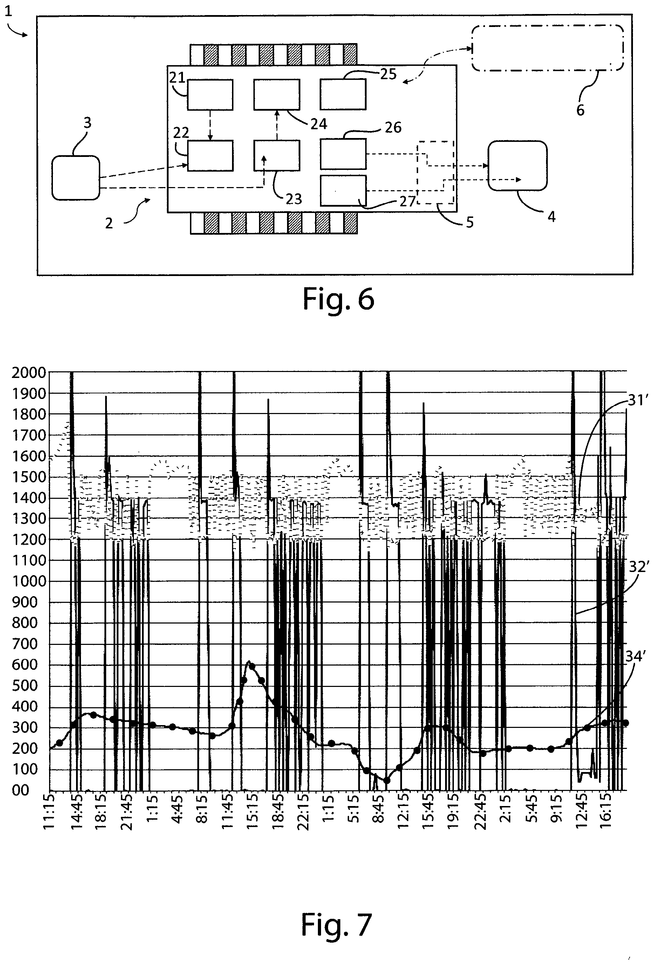

Similarly, the recording module 23 can be configured to log sensor data, for example, every three hours during a week to monitor gas supply following an outage. In this way, the recording of time series is managed in such a way as to record a greater number of data where necessary and to reduce the number of recorded data so as not to saturate the data archive to which the access module 21 has accessed. An example of data acquisition from a plurality of sensors, as shown in figure 7, will be described below.

The processing module 24 is configured to process said one or more time series recorded by said recording module 23.

In this description, processing one or more time series is to be understood as performing mathematical operations with said time series. Examples of these mathematical operations include calculating the average of the values measured by a sensor during a given time interval or excluding an outlier, i.e., a value outside the range of acceptable values for a given sensor.

Said processing module can be configured to process a plurality of time series each corresponding to a sensor of said plurality of sensors 3 in such a way as to combine said time series and define a parameter to be compared with a second threshold value.

In this way, the calculation of the parameters to be compared is not limited to a single sensor, or to multiple sensors of the same type, but can define a parameter based on the processing of various physical quantities, which cooperate or coexist to decide whether it is necessary to stop the gas supply or if it is safe to proceed with the supply itself.

The second comparison module 25 is configured to compare said one or more time series recorded by the recording module 23, and possibly processed by the processing module 24, with said second predetermined threshold values.

The interruption module 26 is a module of the control logic unit 2 capable of communicating with the blocking device 2.

In particular, the interruption module 26 is configured to send an alarm signal and activate said blocking device 4 to block the gas supply, if said values measured by the sensors 3 are higher than said first predetermined threshold values.

In some embodiments, the control logic unit 2 sends, for example through the interruption module 26, the alarm signal to a display 6 to facilitate alarm information to the user.

The interruption module 26 activates the blocking member 4, for example, via the transceiver unit 5, as described below.

Specifically, the blocking member 4 is a solenoid valve capable of blocking or allowing the flow of gas towards the residential network.

The reopening module 27 is configured to send an inhibition command of said blocking member 4 to inhibit said blocking member 4 and allow the supply of gas, if said measured values are higher than said first predetermined threshold values and if the values obtained from a processing of said one or more series, by means of said processing module, are lower than said second predetermined threshold values.

The presence of the reopening module 27 is advantageous as it allows the gas pipe to deliver gas to the users in the presence of an alert signal corresponding to a value outside the permitted range which does not last over time. In fact, if a temperature value is above a maximum temperature at a certain moment, it is possible to verify that this temperature has returned to an admissible value before blocking the gas supply.

In this way, greater stability is guaranteed and interruptions due to the presence of outliers in the sensor measurement are limited. For example, it is possible to define a first threshold value for the maximum range of 6 m³/h and define a second threshold value for the maximum range equal to 7.2 m³/h, where said second threshold value corresponds to the rate at which the network is overloaded. This second threshold value is relevant when evaluating the gas supply over time. In fact, using the reopening module 27 it is possible to maintain the gas supply even when measuring a range greater than 6 m³/h for a certain time interval, provided that said measured flow rate does not exceed the second value of 7.2 m³/h in that time interval.

Furthermore, since the processing module 24 allows one or more time series to be processed and since the comparison module 25 can compare one or more time series with one or more of said first threshold values, it is possible to combine one or more values and one or multiple time series obtained from sensors of different nature to decide whether to block the supply.

Combining one or more values and one or more time series obtained from sensors of different natures to decide whether to block the supply includes, for example, that the interruption module 26 sends a blocking signal to the blocking member 4 if the measured flow rate from a sensor inside the pipe is greater than 6 m³/h and the pressure measured in the pipe is greater than 32 mbar.

Without departing from the scope of protection of the invention, the first and second threshold values can also include minimum threshold values to be respected. An example of the first minimum threshold value for pressure is a value equal to 13 mbar.

With reference to the plurality of sensors 3, the device 1 includes the following types of sensors: a pressure sensor 31, a flow sensor 32, a seismic sensor 33, and a temperature sensor 34.

One or more pressure sensors 31 are arranged inside the first housing 10, and measure the gas supply pressure both in the gas inlet section 11 and in the gas outlet section 12.

Specifically, when the blocking member 4 is closed, the supply is blocked and, therefore, said pressure sensor 31 detects the pressure of the residential user circuit.

When said blocking member 4 is open, the gas flows through the pipe, and said pressure sensor 31 detects the pressure of the distribution network.

The flow sensor 32 is arranged inside the first housing 10 and is able to continuously control the flow of gas flowing in the tube.

The flow sensor 32 is able to measure mixtures of methane gas with other gases of different nature, such as, for example, synthetic methane, biomethane, and hydrogen.

The presence of a flow sensor 32 with said characteristics makes the device 1 versatile and compatible with a plurality of gas mixtures.

The flow sensor 32 is preferably an ultrasonic sensor arranged in contact with the gas in the outlet portion of the gas tube.

Some examples of the device 1 provide an integrated sensor that includes the flow sensor 32 and the temperature sensor 34.

In some examples, an integrated ultrasonic sensor sends waves into the gas pipe and detects the flow rate, the time the gas passes through the sensor, the temperature and samples these values with a defined period, i.e., at regular intervals. Examples of the sampling period are every 125 ms or every 250 ms.

Without departing from the scope of protection, the control logic unit 2 is able to define a sampling period different from those described above.

The temperature sensor 34 is able to send the measured values to said control logic unit 2 which carries out a comparison with a predefined threshold temperature value, stored in said archive and accessible via the access module 21 of said control logic unit 2.

In particular, said temperature sensor 34, in contact with the gas, is used to correctly account for the quantity of gas flowing through the device 1 and can be used to detect potential fires, for example when the temperature is above 80 °C .

The plurality of sensors 3 can include a further environmental pressure sensor, a smoke or flame sensor, a hygrometer, and the like, which can be integrated together or each connected to the control logic unit 2.

In some embodiments, the plurality of sensors 3 comprises one or more sensors capable of detecting a tampering attempt.

In particular, using an accelerometer or a seismic sensor it is possible to verify whether the device 1, or a part of it, for example, the meter, has been removed without authorization. In fact, a non-zero value of said sensors can indicate that device 1 has been removed.

Additionally, tampering can be confirmed by reading a pressure sensor. In particular, the plurality of sensors 3 can include a pressure sensor arranged outside the device 1 to monitor that the device 1 remains in the installation position and recognize when the device 1 is disconnected from the network and, therefore, to identify an attempt of tampering, which corresponds to a zero relative pressure value.

The transceiver unit 5 described above is operationally connected with said control logic unit 2, to which it is connected physically, or via wireless connection, for example, ZigBee, Wi-fi, Bluetooth, or the like.

The transceiver unit 5 includes at least a remote communication modem, an antenna, and a local communication port, or the like.

The transceiver unit 5 communicates in real time to the outside of the device 1, or sends data packets of predefined sizes.

Sending packets can be encoded to save the time of sending and a unique device identification code. Examples of this code include a digital signature that corresponds to each device or the device's serial number.

This allows gas consumption to be read remotely, without requiring the intervention of an operator, and also to carry out the transmission of delivery parameters and any malfunction or dangerous situation.

The power supply is preferably a battery and may include a charge status indicator.

The operation of the device 1 described above is as follows.

The plurality of sensors 3 measures the values and sends them to the first comparison module 22 and to the recording module 23.

The first comparison module uses the values received from the plurality of sensors to compare each of said values with a respective first threshold that the comparison module receives from the access module 21, which accesses an archive, for example, a database or a table of predefined values for each of the quantities measured by the sensors.

As a general rule, if said values detected by said plurality of sensors 3 are higher than said first predetermined threshold values, then the control logic unit 2, through the interruption module 26, closes the blocking member 4 thus interrupting the gas supply.

In some embodiments, the interruption module 26 also sends an alarm signal to be displayed on the display 6, which will differ based on the type of anomaly.

The recording module 23, operationally connected to the plurality of sensors 3, records one or more time series of said values measured by each sensor and communicates with the processing module, to which it sends said one or more time series.

Starting from the received time series, the processing module 24 performs series processing, i.e. one or more mathematical operations on said series. These mathematical operations, as described above, include the arithmetic mean, the median, the maximum, the minimum, the creation of indirect parameters that combine the values of two or more physical quantities measured by the plurality of sensors 3.

At this point, it is possible to compare the processed time series, or equivalently the parameters deriving from them, with second predetermined threshold values, which serve to determine whether an action of the interruption module 26 is to be inhibited. In fact, the comparison between the processed time series and the second threshold values allows the blocking device not to be closed even though a sensor can measure a value greater than the first predetermined threshold, as long as a second condition is respected, i.e., that the corresponding time series does not is greater than the second predetermined threshold.

Thanks to the presence of the interruption module 26, the control logic unit 2 is able to detect potential gas leaks inside the pipe of a residential user, both during the installation phase and during normal use, and thanks to the reopening module 27. the control logic unit 2 will be able to ignore the supply stop signals if the dispersions are negligible or last such a limited time that they are not dangerous or increase consumption.

With reference to figure 7, the values measured by a plurality of sensors 3 including a pressure sensor 31, a flow rate sensor 32, and a temperature sensor 34 reported every three hours and thirty minutes are shown. The data in the following table correspond to the values measured by the sensors in the graph in figure 7 and reported below with a frequency of fifteen minutes during twelve hours:

| Time | Flow rate (dm³/h) | Temperature (°C) | Pressure(mbar) |
|---|---|---|---|
| 11:15 | 0 | 3 | 23,7 |
| 11:30 | 0,66 | 3,12 | 23,8 |
| 11:45 | 0 | 3,18 | 23,9 |
| 12:00 | 0,08 | 3,31 | 24,1 |
| 12:15 | 0 | 3,31 | 24,3 |
| 12:30 | 0 | 3,37 | 24,5 |
| 12:45 | 0 | 3,5 | 24,8 |
| 13:00 | 0 | 3,62 | 25,2 |
| 13:15 | 0 | 3,75 | 25,8 |
| 13:30 | 0 | 3,93 | 26,1 |
| 13:45 | 0 | 4,12 | 26,4 |
| 14:00 | 0 | 4,31 | 18,5 |
| 14:15 | 2367,26 | 4,56 | 17,8 |
| 14:30 | 1563,65 | 4,81 | 18,6 |
| 14:45 | 1385,62 | 5 | 17,6 |
| 15:00 | 0 | 5,12 | 19 |
| 15:15 | 1382,92 | 5,25 | 18,2 |
| 15:30 | 0,13 | 5,37 | 22,7 |
| 15:45 | 0 | 5,43 | 20,5 |
| 16:00 | 0 | 5,5 | 22,7 |
| 16:15 | 0 | 5,56 | 22,7 |
| 16:30 | 4,5 | 5,56 | 18,6 |
| 16:45 | 0 | 5,5 | 22,1 |
| 17:00 | 0 | 5,5 | 19,5 |
| 17:15 | 0 | 5,5 | 20,5 |
| 17:30 | 0 | 5,43 | 18,9 |
| 17:45 | 0 | 5,43 | 18,8 |
| 18:00 | 0 | 5,37 | 22,4 |
| 18:15 | 0 | 5,31 | 23 |
| 18:30 | 0,08 | 5,31 | 22,9 |
| 18:45 | 0 | 5,25 | 23 |
| 19:00 | 1881,11 | 5,18 | 18,1 |
| 19:15 | 1387,54 | 5,12 | 18,4 |
| 19:30 | 1589,18 | 5,12 | 22,8 |
| 19:45 | 1398,46 | 5,12 | 17,8 |
| 20:00 | 1382,91 | 5,12 | 18 |
| 20:15 | 0 | 5,12 | 20 |
| 20:30 | 0 | 5,12 | 22,9 |
| 20:45 | 1407,04 | 5,06 | 17,8 |
| 21:00 | 1384,58 | 5,06 | 17,8 |
| 21:15 | 1386,16 | 5 | 18,2 |
| 21:30 | 0 | 5 | 20,9 |
| 21:45 | 2,47 | 5 | 18,5 |
| 22:00 | 0 | 5 | 22,6 |
| 22:15 | 0 | 5 | 18,7 |
| 22:30 | 1389,6 | 5 | 18,5 |
| 22:45 | 1172,97 | 5 | 17,3 |
| 23:00 | 1390,2 | 4,93 | 17,8 |
| 23:15 | 0,21 | 4,93 | 22,3 |
| 23:30 | 1398,92 | 4,87 | 17,9 |

The device 1 allows managing the gas supply based on one or more sensors of said plurality of sensors 3.

The operation of the device 1 is described below as a function of the values measured by a pressure sensor 31.

If a pressure sensor 31, arranged near the outlet section of the pipe, detects a sudden drop in pressure of the gas flow, for example due to a leak, such that the pressure variation is greater than a first threshold of pressure variation and a second pressure variation threshold, the interruption module 26 sends to said blocking member 4 instructions for closing the gas supply.

The operator or user, after having verified that all domestic gas appliances are closed, can then press a reset button, which is preferably arranged on the external surface of said second housing 13.

At this point, said control logic unit 2 checks for any gas leaks on the residential user.

If the pressure sensor 31 detects a further drop in pressure, said control logic unit 2 commands the closing of said blocking member 4.

Furthermore, the control logic unit 2 sends an alarm message to the display 6 which projects it.

If the user has properly shut off the gas utilities, this additional drop in pressure is actually an indication of a leak or malfunction in a gas utility.

Otherwise, if a further drop in pressure does not occur, having therefore verified that the device 1 is hermetically closed on the user, said control logic unit 2 commands the reopening of said blocking device 4.

If the pressure sensor 31 is arranged in proximity to the distribution network, it can detect a pressure drop on the gas distribution network, for example, due to a malfunction on the network.

Therefore, in case of a malfunction on the distribution network, the logic control units 2 of the various devices 1 connected to the network in which the malfunction was detected, close the corresponding blocking devices 4 and send the alarm signals to a control center.

When the malfunction is repaired, the user or the distribution network operator, after verifying that the gas utilities are turned off, presses the reset button.

Said control logic unit 2 then verifies the state of the gas distribution network.

If the correct gas supply is verified, the control logic unit 2 reopens the blocking member 4.

In particular, using the pressure sensor 31 it is possible to check the integrity of the user system when the blocking member 4 is opened.

The procedure involves monitoring the pressure inside device 1 for approximately two minutes.

If, within this period, the pressure is not within pre-established ranges, for example between 13 and 32 mbar, said blocking member 4 is closed again.

From the moment of the reopening of said blocking member 4 the following events occur:
- after T₀ seconds, the pressure P₀ is measured;
- after other T₁ seconds, the pressure P₁ is measured;
- after other T₂ seconds, the pressure P₂ is measured.

Said locking member 4 remains open if both of the following conditions are verified:
1. P₀, P₁, P₂ ≥ minimum pressure Pₘᵢₙ (mbar), for example prefixed to the value of 13 mbar; and
2. P₁-P₂ < P_{D} (mbar), prefixed to a value of 1 mbar, for example.

It is also possible to check the pressure of the downstream distribution network, i.e., the pressure of the gas coming from the distribution network, by continuously monitoring it.

When this falls below a first predefined threshold P_{rete_min}, an alarm is generated and if during a certain time interval it is also below a second predefined threshold P_{rete'_min} the blocking member 4 is activated.

Furthermore, said device 1 is also capable of performing the function of a data logger and allows the predetermined threshold values to be updated following the recordings of the time series by means of an update module.

The update is carried out using an update module capable of replacing the second predetermined threshold values with the second threshold values obtained from the processing of the time series recorded by the logic unit 2.

In this way, it is possible to manage the gas supply dynamically, updating the threshold values based on an input from the network manager, extreme weather conditions, or variations external to the device 1.

Therefore, the device 1 can be remotely configured, through the transceiver unit 5, to store the pressure values measured at regular intervals and for a predefined period of time.

The presence of the pressure sensor 31 therefore makes it possible to continuously measure the relative pressures on the network.

The control of network pressures makes it possible, therefore, not only to certify the general state of efficiency of a low-pressure gas network, verifying compliance with the specifications of the relevant technical legislation but also to identify with great precision the areas in which the operating conditions can be critical long before this situation is detected by measurements pursuant to the UNI/TR 11631 standard and subsequent amendments and additions.

Similarly to what is described above for the pressure sensor 31, the device 1 manages the measurement of other sensors, such as a flow sensor 32 or a temperature sensor 34, and is able to work as a data logger also for the corresponding physical quantities to said sensors.

Without departing from the scope of protection, the processing module 24 and the transceiver unit 5 can be programmed to activate in the event of receiving a command or an anomalous measurement, so as to reduce the battery consumption of the device.

Similarly, the recording and updating modules can be programmed to allocate more memory when more frequent checking of the values measured by the sensors is required.

### Advantages

The device of the present invention provides security and data recording functions that allow the installation of said device without requiring further support equipment.

Furthermore, the device of the invention allows remote recording of data, avoiding the need for a highly specialized operator to go to the place where the device is installed to carry out the recording itself.

If an anomaly is found, the device of the invention allows verifying both single measurements and series of measurements to determine the need to momentarily interrupt the gas supply downstream of the measurement point and possibly operate safely on the pipe.

To install the device of the invention it is not necessary to operate on the network infrastructures. In particular, a standard connection is used from the network to the user without making any modifications and without requiring special joining pieces.

The device has its own data access module and its own memory space on which to download or update the data and from which to read the data to compare with the measurements carried out by the sensors 3.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Device (1), for reading and controlling the gas supply, wherein there is an input connector (11) and an output connector (12) of a pipe in which gas flows from a distribution network towards at least one residential user, comprising a control logic unit (2) for the operation of said device (1), which includes
a plurality of sensors (3) operationally connected to said control logic unit (2), for measuring values of physical quantities,
a gas supply blocking member (4), operationally connected to said control logic unit (2), wherein
said control logic unit (2) includes:
a threshold value access module (21) configured to receive, from an archive, first and/or second predetermined threshold values;
a first comparison module (22) configured to compare said values measured by said plurality of sensors (3) with said first predetermined threshold values;
a recording module (23), operatively connected to said plurality of sensors (3), configured to record one or more time series of said values measured by each sensor of said plurality (3);
a processing module (24) configured to process said one or more time series recorded by said recording module;
a second comparison module (25) configured to compare said one or more recorded time series with said second predetermined threshold values;
an interruption module (26) configured to send an alarm signal and activate said blocking member (4) to block the gas supply, if said measured values are higher than said first predetermined threshold values; and
a reopening module (27) configured to send an inhibition command of said blocking member (4) to inhibit said blocking member (4) and allow the gas supply, if said measured values are higher than said first predetermined threshold values and if the values obtained from a processing of said one or more series, by means of said processing module, are lower than said second predetermined threshold values.

2. Device (1) according to claim 1, wherein said control logic unit (2) further comprises
a threshold module configured to determine additional second threshold values obtained from said one or more time series processed by said processing module, and
a storage module configured to store, in said archive, said second threshold values obtained from said processing.

3. Device (1) according to the preceding claim, wherein said control logic unit (2) comprises an update module for updating said second predetermined threshold values.

4. Device (1) according to the preceding claim, wherein said updating module is capable of updating said second predetermined threshold values with said second threshold values obtained from said processing.

5. Device (1) according to any of the previous claims, wherein said recording module is capable of saving said one or more time series in a dedicated memory space, which is accessible from said control logic unit (2).

6. Device (1) according to any one of the preceding claims, wherein said recording module is capable of defining the frequency and the duration at which to record said one or more time series of said measured values.

7. Device (1) according to any one of the preceding claims, wherein said processing module is configured to process a plurality of time series each corresponding to a sensor of said plurality of sensors (3), so as to combine said time series and define a parameter to compare with a second threshold value.

8. Device (1) according to any one of the previous claims, comprising a display (6), operationally connected to said control logic unit (2), for displaying said measured values, said alarm signal, and/or said reopening control command.

9. Device (1) according to any one of the preceding claims, wherein
said plurality of sensors (3) comprises at least one of a flow, temperature, pressure and vibration sensor, and in which
said predetermined threshold values include predetermined threshold values of at least one of a threshold value of flow rate, temperature, pressure and vibration or a combination thereof.

10. Device (1) according to any one of the preceding claims, wherein said plurality of sensors comprises a temperature sensor (34) arranged in contact with the gas for measuring the temperature of the gas itself.

11. Device (1) according to any of the preceding claims, wherein said plurality of sensors comprises a pressure sensor (31), for detecting the gas supply pressure close to said inlet connector (11) and/or said output connector (12).

12. Device (1) according to any of the preceding claims, wherein said plurality of sensors comprises a seismic sensor (33) for detecting higher vibrations.

13. Device (1) according to any of the previous claims, comprising a transceiver unit (5), operationally connected to said control logic unit (2), for sending said alarm signal to a remote control unit and for receiving, from said remote control unit, commands and parameters for the operation of said control logic unit (2).

14. Device (1) according to any of the preceding claims, wherein said plurality of sensors (3) comprises one or more sensors capable of detecting an attempt to tamper with said device (1).

15. Computer program comprising instructions which, when the program is executed by a computer installed in a device (1) according to any of claims 1-14, cause the computer to execute the steps:
A. measuring values of physical quantities using a plurality of sensors (3);
B. receiving, from an archive, first and/or second predetermined threshold values;
C. comparing said values measured according to step A with said first predetermined threshold values;
D. recording one or more time series of said values measured by each sensor of said plurality of sensors (3);
E. processing said one or more time series recorded according to step D;
F. comparing said one or more recorded time series with said second predetermined threshold values;
G. sending an alarm signal and activate said blocking member (4) to block the gas supply, if said measured values are higher than said first predetermined threshold values; and
H. sending an inhibition command of said blocking member (4) to inhibit said blocking member (4) and allowing the supply of gas, if said measured values are higher than said first predetermined threshold values and if the values obtained according to step E are lower than said second predetermined threshold values.

16. A computer-readable storage medium comprising instructions which, when executed by a computer, cause the computer to execute steps A-H according to the preceding claim.
